# EUROPEAN PATENT APPLICATION

(11) **EP 4 834 763 A1**
(43) Date of publication of application: **04.11.2026**
(21) Application number: 26168762.8
(22) Date of filing: 27.03.2026
(51) Int. Cl.: B64D 11/02, E03D 9/00, E03D 11/13

(54) **SPLASH PROTECTION IN AN AIRCRAFT TOILET**

(30) Priority: 29.04.2025 DE 102025001430
(71) Applicant: Airbus Operations GmbH, 21129 Hamburg (DE)
(72) Inventor: MÜLLER, Matthias, 21129 Hamburg (DE); OHLFEST, Carsten, 21129 Hamburg (DE); SPILLE, Marc, 21129 Hamburg (DE); RUNGE, Andreas, 21129 Hamburg (DE)
(74) Representative: LKGLOBAL Partnerschaftsgesellschaft mbB

(57) **Abstract**

The present invention relates to splash protection in aircraft toilets. In order to provide a splash protection that is improved in terms of low costs regarding e.g. installation and maintenance, a splash deflector (10) for an aircraft toilet bowl is provided. The splash deflector comprises a deflector ring body (14) having a cross-section with an abutment portion (16) and a deflector flange portion (18). The splash deflector also comprises a mounting arrangement (20) with a plurality of mounting portions (22) that are configured to detachably fix the ring body to the toilet bowl. The abutment portion is configured to abut against an inner surface portion of the aircraft toilet bowl in an upper edge area. The deflector flange portion is configured to provide a splash barrier along a circumferential opening edge for liquids present inside the toilet bowl. The deflector flange portion is connected to the abutment portion, and, in a mounted state, protrudes from the abutment portion in a radially inward direction of the deflector ring body. The deflector flange portion is configured to leave an annular ventilation gap arrangement (VG) between a distal end (24) of the deflector flange portion and an inner part (26) of a shroud portion (28) of a shroud (30), which shroud portion forms a base for a toilet seat above the toilet bowl.

## Description

### FIELD OF THE INVENTION

The present invention relates to splash protection in aircraft toilets, and relates in particular to a splash deflector for an aircraft toilet bowl, to a toilet system for an aircraft, to an aircraft and to a method for splash protection in an aircraft toilet bowl.

### BACKGROUND OF THE INVENTION

Onboard of aircrafts, in particular passenger aircrafts, lavatories are installed comprising one or more toilet rooms with a toilet bowl to serve passengers and crew members during their presence onboard the aircraft. Since lavatories can be used e.g. during flight motion of the aircraft, the toilet bowls are subject to various intended and also unintended use scenarios. For example, in one scenario, sudden motion of the aircraft can lead to liquids inside the toilet bowl to spill and flow over an upper edge of the toilet bowl. Another scenario is the attempt to pour or otherwise transfer liquids into the toilet bowl, which may also result in spilling and flowing over the upper edge. The term splash is used for such unwanted exiting of liquids from inside the bowl over the upper edge of the bowl. The different examples of splash may lead to entry of liquid into areas of the lavatory in the vicinity of the toilet bowl, thus also causing contamination; splash of liquids may also result in affecting constructions behind cover panels. As an example for a protective measure, a splashguard is provided in WO 2016/160920 A1. However, it has been shown that precision may be required for manufacturing and installation which impair a beneficial use scenario for aircraft operators.

### SUMMARY OF THE INVENTION

There may thus be a need to provide a splash protection that is improved in terms of low costs regarding e.g. installation and maintenance.

The object of the present invention is solved by the subject-matter of the independent claims; further embodiments are incorporated in the dependent claims. It should be noted that the following described aspects of the invention apply also for the splash deflector for an aircraft toilet bowl, for the toilet system for an aircraft, for the aircraft and for the method for splash protection in an aircraft toilet bowl.

According to the present invention, a splash deflector for an aircraft toilet bowl is provided. The splash deflector comprises a deflector ring body having a cross-section with an abutment portion and a deflector flange portion. The splash deflector also comprises a mounting arrangement with a plurality of mounting portions that are configured to detachably fix the ring body to the toilet bowl. The abutment portion is configured to abut against an inner surface portion of the aircraft toilet bowl in an upper edge area. The deflector flange portion is configured to provide a splash barrier along a circumferential opening edge for liquids present inside the toilet bowl. The deflector flange portion is connected to the abutment portion, and, in a mounted state, protrudes from the abutment portion in a radially inward direction of the deflector ring body. The deflector flange portion is configured to leave an annular ventilation gap arrangement between a distal end of the deflector flange portion and an inner part of a shroud portion of a shroud, which shroud portion forms a base for a toilet seat above the toilet bowl.

As an advantage, a robust and reliable splash guard is provided that is easy to manufacture and that allows a facilitated installation and replacement procedure. The permanent gap arrangement ensures a proper function of the suction functionality of the toilet system even when a lid is closed, or a passenger occupies the complete upper opening of the toilet bowl.

The reduced form results in minimal extra weight, while providing benefits in terms of the durability of the use of the toilet. Another benefit are low costs.

The splash deflector prevents that during use of a toilet assembly, in particular when urinating or pouring of fluids into the toilet, fluids splash out of the toilet bowl. Hence, it is prevented that fluids flow along the surface of the bowl and leave the bowl via the flow paths. Fluids can no longer, or at least not so easy, flow over the upper rim of the bowl.

The ventilation gap arrangement comprises a continuous arcuate ventilation slot. In an option, the ventilation gap arrangement is provided such that a free distance is provide for different types of shrouds. In an alternative option, the ventilation gap arrangement comprises a plurality of arcuate ventilation slots.

As a further advantage, an exchangeability is provided that allows a faster cleaning and maintenance routine. Instead of cleaning on the spot, the splash deflector can be de-mounted and can be subject to a cleaning procedure off-board the aircraft, i.e. in ground facilities. The exchangeability also addresses the limited endurance of plastic material applied in a toilet system.

As another advantage, the design of the splash deflector also allows retrofitting on existing toilet assemblies.

According to an example, the deflector flange portion provides a primary deflector ramp along a majority of the circumferential direction and a secondary deflector ramp along a minor part of the circumferential direction. In the mounted state, the secondary deflector ramp is arranged on a lower level than the primary deflector ramp. The secondary deflector ramp is configured to provide a staggered splash barrier for an auxiliary opening area provided in an upper edge region of the toilet bowl.

The secondary flange prevents that splash fluids can flow through the overflow holes of the bowl. The auxiliary opening area provide an overflow opening, also referred to as spillover opening. The overflow hole deflector might also extend upwards at the side of the overflow holes.

According to an example, the auxiliary opening area comprises at least one longitudinal overflow opening in the toilet bowl, the opening being arranged below an upper edge of the toilet bowl.

As an advantage, the secondary deflector provides a splash guard avoiding splashing liquids to reach the overflow opening. However, the overflow opening of course still functions as required to ensure a defined overflow level of the toilet bowl.

According to an example, in a first option, the secondary deflector ramp is integrally formed with the deflector flange portion. In a second option, the secondary deflector ramp is removably fixed to the deflector flange portion. In a third option, the secondary deflector ramp is removably hold by a spray ring arranged along an upper region of the toilet bowl.

According to an example, the mounting portions are radially extending mounting plates. The mounting plates are configured to rest on an upper edge of the toilet bowl. As an option, the mounting plates comprise through-holes for releasably attaching the splash deflector with screws or other mounting elements to the upper edge of the toilet bowl.

As an advantage, a reliable but easy to implement installation is provided that also allows a facilitated de-installation, e.g. for replacement purposes. The mounting plates can rest on an upper rim part of the toilet bowl. The mounting plates can then reach towards or into the toilet bowl where the deflector ring body is provided. This allows to arrange the deflector ring body below the actual upper rim. Thus, the deflector ring body does not add any further height to the system. For example, while being thin plates, the mounting plates do not add extra and unnecessary height to a toilet seat resting on the upper rim of the toilet bowl. As an example, the mounting plates can be arranged between resting portions of the seat.

According to an example, a holding arrangement for a spray ring is provided that comprises a plurality of spray ring mounts.

As a beneficial aspect, a minimized construction of the toilet system is enabled since the number of required parts is reduced to a minimum, e.g. extra spray ring mounts are not required.

According to an example, the deflector flange portion forms a rigid deflector blade.

As an effect, an improved protection is provided and also cleaning and handling are facilitated compared to flexible solutions.

According to an example, the deflector ring body is made from a water-repellent plastic material.

This minimizes contamination over time by reducing residual liquid resting on the deflector portion. The water-repellent feature also supports cleaning.

According to the present invention, also a toilet system for an aircraft is provided. The system comprises an aircraft toilet bowl and a splash deflector according to one of the proceeding examples. The splash deflector is removably mounted to the toilet bowl.

According to an example, a shroud is provided that at least partly encloses an outer side of the toilet bowl. The shroud also extends over the upper edge of the toilet bowl; and the shroud has an edge flange portion protruding downwards into the toilet bowl. A permanent ventilation gap is provided between an inner edge of deflector flange portion and the edge flange portion of the shroud.

As indicated above, the permanent gap ensures a proper functioning of the vacuum toilet flush and waste extracting system. The permanent gap allows tolerances and also enables to use the same splash guard for varying shroud shapes.

According to an example, the splash deflector is removably mounted to the toilet bowl.

This allows e.g. to remove and replace the splash deflector during cleaning or maintenance routine. For example, the splash deflector can be reusable such that on board the aircraft, only an exchange is required, while cleaning and/or disinfecting can be provided machine-based at e.g. ground facilities.

According to an example, an inner free edge of the deflector flange portion is pointing downwards.

As an advantage, the downwards direction of the upper surface results in liquid present on the upper side, e.g. due to unintended spilling or unwanted spraying, will flow back into the toilet bowl by gravity.

According to an example, a spray ring is arranged below the deflector flange portion. The spray ring is configured to spray rinsing and/or cleaning fluid into the toilet bowl. In an option, in a mounted state, the splash ring is arranged below an upper edge of the toilet bowl.

The upper rim might have a surface structure that improves fluids flowing back into the bowl, for example grooves.

According to the present invention, also an aircraft is provided that comprises a fuselage structure enclosing a cabin area. At least one lavatory is provided within the cabin area and the at least one lavatory comprises a toilet with i) a splash deflector according to one of the examples above, or ii) a toilet system according to one of the examples above.

According to the present invention, also a method for splash protection in an aircraft toilet bowl is provided. The method comprises the following steps:
- Providing an aircraft toilet bowl;
- Providing a splash deflector that comprises a deflector ring body with a cross-section having an abutment portion and a deflector flange portion, and a mounting arrangement having a plurality of mounting portions that are configured to detachably fix the ring body to the toilet bowl; the deflector flange portion is connected to the abutment portion; and
- Arranging the splash deflector such that the abutment portion abuts against an inner surface portion of the aircraft toilet bowl in an upper edge area; the deflector flange portion protrudes from the abutment portion in a radially inward direction of the deflector ring body; the deflector flange portion provides a splash barrier along a circumferential opening edge for liquids present inside the toilet bowl; and the deflector flange portion leaves an annular ventilation gap arrangement between a distal end of the deflector flange portion and a shroud portion that forms a base for a toilet seat above the toilet bowl.

According to an aspect, deflectors at the upper rim and the overflow are provided. The deflectors will direct a major part of the fluids back into the bowl.

The deflector for the upper rim and the overflow holes are designed as an integral part, or separately. It is possible to install only one of the deflectors, i.e. the primary or the secondary flange portions.

The deflectors can also be used on waterless toilets, e.g. toilets without a spray ring.

The cross-section of the deflectors might have different shapes, in order to optimize the function.

The deflectors are designed in a way to not inappropriately limit the required airflow into the bowl, required when flushing the toilet and to not inappropriately limit the overflow function of the overflow holes. This is ensured by the ventilation gap that is permanently present.

In an option, the splash deflector is configured as a retrofit kit to upgrade existing toilet bowls.

In another option, the splash deflector is an add-on kit to upgrade toilet bowls forming an improved toilet system.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a splash deflector in a vertical cross-section.
Fig. 2 shows another example of a splash deflector in a perspective view from below.
Fig. 3 shows a further example of a splash deflector in a perspective view from above.
Fig. 4 shows an example of a toilet system with a splash deflector in a perspective view.
Fig. 5 shows another perspective view of the example of Fig. 4.
Fig. 6 shows a detail of the toilet system of Fig. 4 and Fig. 5 in a perspective view.
Fig. 7 shows the toilet system of Fig. 4 and Fig. 6 in a perspective cross-sectional view.
Fig. 8 shows another detail of an example of the splash deflector in a perspective view.
Fig. 9 shows detail of the splash deflector of Fig. 8 in a perspective cross-sectional view.
Fig. 10 shows an example of an aircraft in a cross-sectional view.
Fig. 11 shows basic steps of an example of a method for splash protection in an aircraft toilet bowl.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

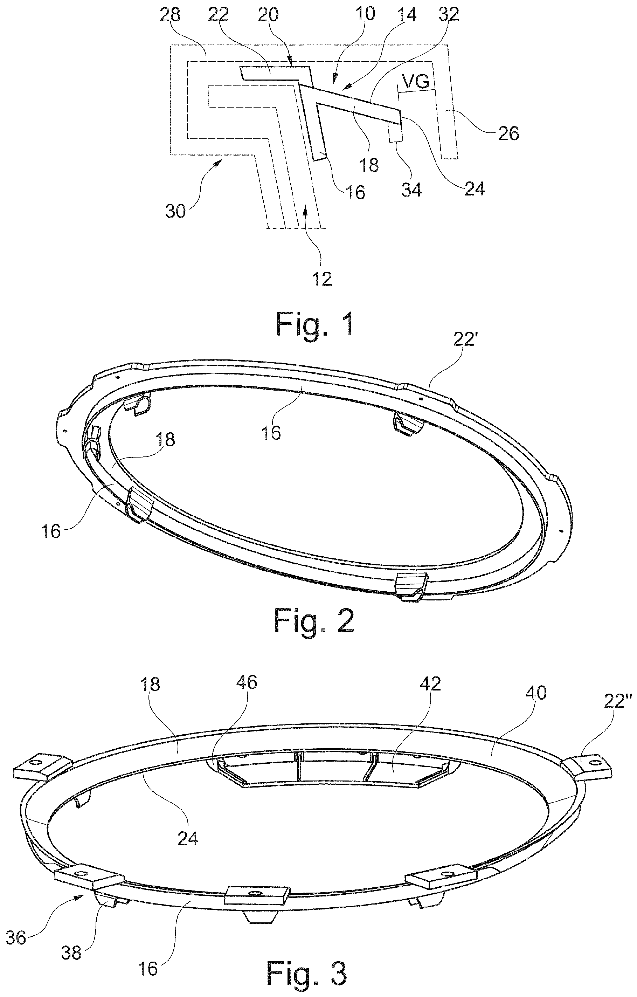

Fig. 1 schematically shows an example of a splash deflector 10 for an aircraft toilet bowl 12. The splash deflector 10 comprises a deflector ring body 14 having a cross-section with an abutment portion 16 and a deflector flange portion 18. The splash deflector 10 also comprises a mounting arrangement 20 with a plurality of mounting portions 22 that are configured to detachably fix the ring body 14 to the toilet bowl 12. The abutment portion 16 is configured to abut against an inner surface portion of the aircraft toilet bowl 12 in an upper edge area. The deflector flange portion 18 is configured to provide a splash barrier along a circumferential opening edge for liquids present inside the toilet bowl 12. The deflector flange portion 18 is connected to the abutment portion 16. In a mounted state, the deflector flange portion 18 protrudes from the abutment portion 16 in a radially inward direction of the deflector ring body 14. The deflector flange portion 18 is configured to leave an annular ventilation gap arrangement *VG* between a distal end 24 of the deflector flange portion 18 and an inner part 26 of a shroud portion 28 of a shroud 30, which shroud portion 28 forms a base for a toilet seat above the toilet bowl 12.

In Fig. 1, the toilet bowl 12 is shown in broken lines as not being direct part of the splash deflector 10. Further, the shroud portion 28 is also shown in broken lines as not being direct part of the splash deflector 10.

However, the toilet bowl 12 and the shroud 28 are part of an example of a toilet system as described below in more detail.

In an example, the deflector flange portion 18 forms a rigid deflector blade.

The term "rigid" refers to that the deflector flange portion is non-flexible. For example, when being subject to liquid spilling or spraying, a visible change in the shape and form cannot be detected. Also, upon touching, the deflector flange portion 18 does not move or change its cross-section.

In an example, the deflector ring body 14 is made from a water-repellent plastic material.

In an example, the deflector flange portion 18 is made from a water-repellent plastic material. In another example, in addition or alternatively, the abutment portion 16 is made from a water-repellent plastic material.

In Fig. 1, the mounting portions 22 are resting on top of an upper edge or rim of the toilet bowl 12.

Shown as an option in Fig. 1, an inner free edge 32 of the deflector flange portion 18 is pointing downwards, i.e. the deflector flange portion 18 has a downwards inclination such that liquid on top of the deflector flange portion 18 flows into the toilet bowl 12.

In a variation, shown in Fig. 1 with broken lines, a drip-off edge 34 is provided at the inner end of the free edge 24. The drip-off edge 34 points vertical down into the toilet bowl 12.

The inner free edge 24 is the distal edge pointing radially inwards. This provides a drip-off edge in a distance to the inner side of the toilet bowl 12.

The upper rim deflector might have a drip edge at defined positions, to support fluids dropping only at defined areas.

For example, the inner free edge is formed by a plate-like protrusion with parallel upper and lower surfaces, the plate-like protrusion is inclined in a manner that its free, i.e. distal edge is arranged lower in a mounted state that an area where the deflector flange portion 18 is connected to the abutment portion 16.

Fig. 2 shows an example of the splash deflector 10, in which the mounting portions 22 are radially protruding extension portions 22' of an upper support ring that rests on the upper edge of the toilet bowl 12.

Fig. 2 shows an example, in which, as an option, a holding arrangement 36 for a spray ring (see below) is provided that comprises a plurality of spray ring mounts 38.

The spray ring mounts 38 are provided as clamps for inserting the spray ring.

In an alternative solution, the splash deflector 10 is mounted to the spray ring. The spray ring is rigid in this example.

When clipping the spray ring to the splash deflector 10, the spray ring can also be flexible.

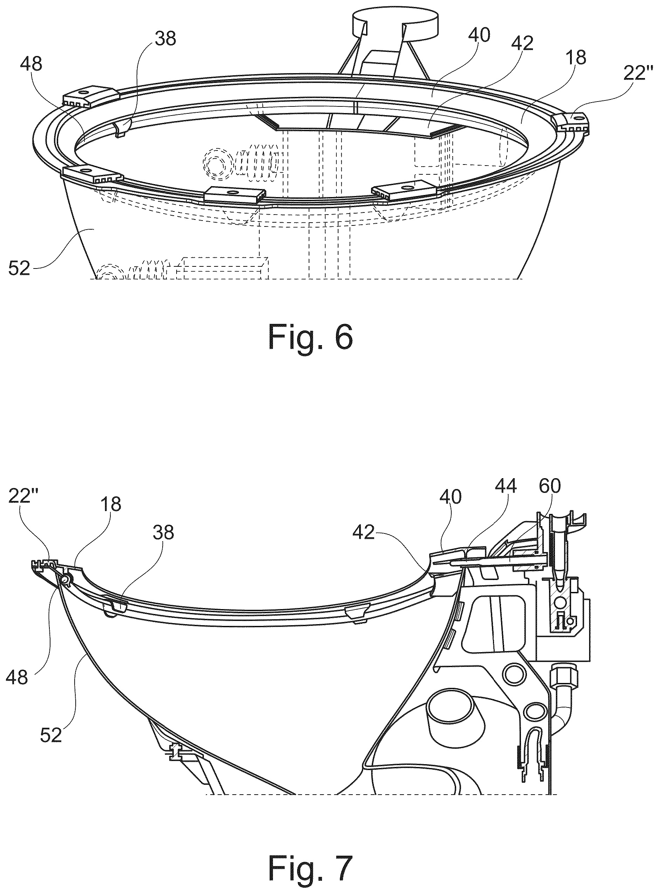

As an option of the splash deflector 10, it is shown in Fig. 3 that the deflector flange portion 18 provides a primary deflector ramp 40 along a majority of the circumferential direction, and a secondary deflector ramp 42 along a minor part of the circumferential direction. In the mounted state, the secondary deflector ramp 42 is arranged on a lower level than the primary deflector ramp 40. The secondary deflector ramp 42 is configured to provide a staggered splash barrier for an auxiliary opening area 44 (see also Fig. 7) provided in an upper edge region of the toilet bowl 12.

The upper rim of the splash deflector 10, i.e. the primary deflector ramp 40, might be located over the complete toilet rim circumference, or might be located only partly along the circumference. It might build a combined part with the overflow hole deflector, i.e. the secondary deflector ramp 42.

The design principles above are also applicable for toilets that do not have overflow holes, but where the upper rim is lowered in defined overflow areas. On toilets without overflow holes, the upper rim deflector can also be used standalone without the overflow hole deflector below.

In an example, the primary deflector ramp 40 is made from a water-repellent plastic material. In a further example, in addition or alternatively, the secondary deflector ramp 42 is made from a water-repellent plastic material.

The deflectors might be built from plastics, or might be coated non-sticking, in order to allow fluids to better flow back into the bowl, and to ease cleaning.

In an example, the primary deflector ramp 40 has an upper surface that points downwards.

In another example, also the secondary deflector ramp 42 has an upper surface that points downwards.

Fig. 3 shows an example, in which the mounting portions are radially extending mounting plates 22". The mounting plates 22" are configured to rest on the upper edge of the toilet bowl 12. Shown as an option, the mounting plates 22" comprise through-holes for releasably attaching the splash deflector 10 with screws or other mounting elements to the upper edge of the toilet bowl 12.

In an option, the mounting arrangement 20, e.g. the mounting portions 22, are providing a quick disconnect function, i.e. the splash deflector 10 can quickly be disconnected, e.g. for cleaning, maintenance or replacement purposes.

Fig. 3 also shows, as an option, the holding arrangement 36 for a spray ring that comprises the plurality of the spray ring mounts 38.

Shown as an option, the secondary deflector ramp 42 is integrally formed with the deflector flange portion 18. For example, the secondary deflector ramp 42 is hold by cantilevering ribs 46 that are integrally made with the primary deflector ramp 40.

In a variation (not shown), the secondary deflector ramp 42 is removably fixed to the deflector flange portion 18.

In another variation (also not shown), the secondary deflector ramp 42 is removably hold by a spray ring arranged along an upper region of the toilet bowl 10.

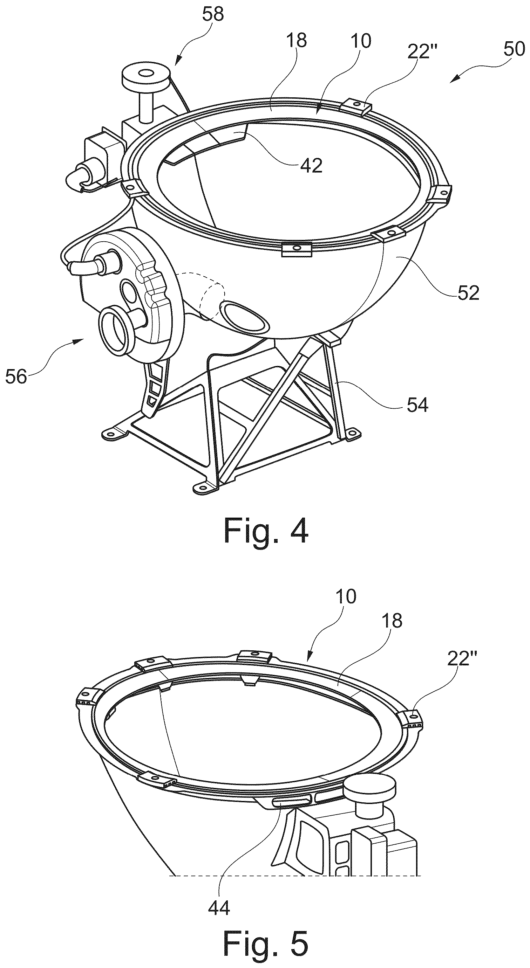

Fig. 4 shows an example of a toilet system 50 for an aircraft. The system 50 comprises an aircraft toilet bowl 52 and an example of the splash deflector 10 according to one of the proceeding examples. The splash deflector 10 is removably mounted to the toilet bowl 52.

As an option (although not shown in Fig. 4), a shroud is provided that at least partly encloses an outer side of the toilet bowl 52, and that extends over the upper edge of the toilet bowl 52, and that has an edge flange portion protruding downwards into the toilet bowl 52. The permanent ventilation gap *VG* is provided between the inner edge of the deflector flange portion 18 and the edge flange portion of the shroud.

The shroud forms a housing around the toilet bowl 52. In an option, the toilet bowl 52 is made from a metal material and the shroud is made from a plastic material. In an example, the toilet bowl 52 is hold and mounted by a support structure 54 which is mounted to a floor construction. The toilet bowl 52 can thus transfer loads forces, e.g. caused by the weight of a user, into the floor area. In an option, the shroud is also configured to transfer load forces.

Further, some technical arrangement is indicated that is provided for operating the toilet system 50. For example, a drain arrangement 56 for supplying a vacuum to a lower drainage, i.e. outlet opening of the toilet bowl 52 is provided. Further, some rinsing liquid supply arrangement 58 is indicated.

In an option, an upper rim of the toilet bowl 52 supports the splash deflector 10, and the shroud is separately supported. In another option, the upper rim of the toilet bowl 52 is also supporting the shroud, which covers the toilet bowl 52 on its side and in the upper rim area.

In an example, a movable toilet seat (not shown) can be provided that rests on the shroud. In another example, the shroud's upper ring-form part acts as the toilet seat. In an option, a movable toilet lid is arranged that closes the upper toilet opening, e.g. such that a user can sit on the lid.

As an option, it is provided that the splash deflector 10 is removably mounted to the toilet bowl 52.

In an example, instead of removably mounted to the toilet bowl 52, the splash deflector 10 is removably mounted to the shroud.

In a further example, in addition to being removably mounted to the toilet bowl 52, the splash deflector 10 is also removably mounted to the shroud.

Fig. 5 shows another view of the toilet system 50. It is noted that the shroud is not shown in Fig. 5.

The auxiliary opening area 44 comprises at least one longitudinal overflow opening in the toilet bowl 52, the opening being arranged below an upper edge of the toilet bowl 52.

Fig. 6 shows a more detailed view of the toilet system 50 of Fig. 4 and Fig. 5. It is noted that the shroud is also not shown in Fig. 6.

Shown as an option in Fig. 6, a spray ring 48 is arranged below the deflector flange portion 18. The spray ring 48 is configured to spray rinsing and/or cleaning fluid into the toilet bowl 52. Shown as an option, in a mounted state, the spray ring 48 is arranged below an upper edge of the toilet bowl 52.

In a first option, the spray ring 48 is provided as a separate component to the splash deflector 10. In a second option, the spray ring 48 is provided integrated with the splash deflector 10, or the splash deflector 10 is provided integrated with the spray ring 48, e.g. the spray ring 48 and the splash deflector 12 are provided as a common component.

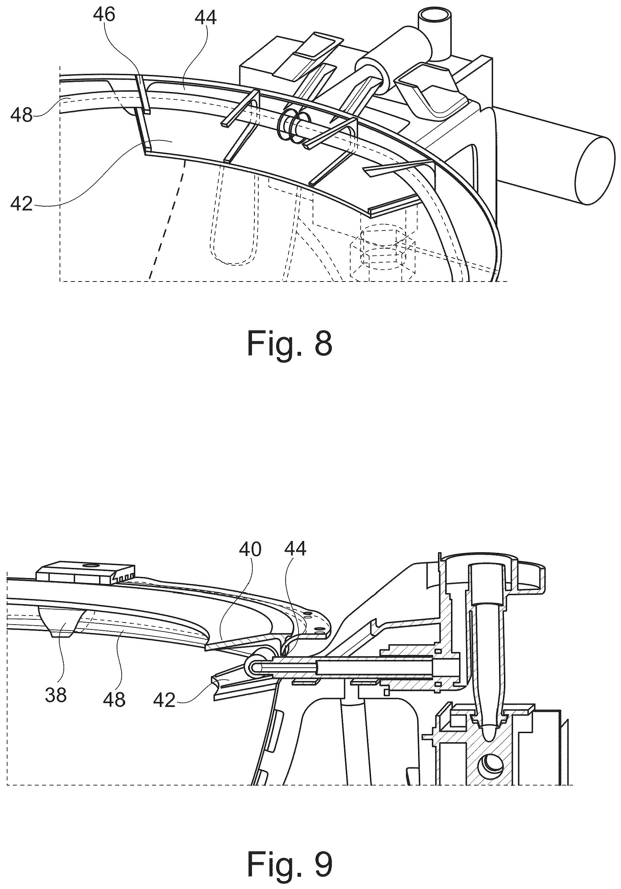

Fig. 7 shows the toilet system 50 of Fig. 4, Fig. 5 and Fig. 6. It is noted that the shroud is not shown here as well. A supply 60 for the spray ring 48 is shown in Fig. 7 (see also Fig. 8 and Fig. 9).

Fig. 8 shows another detail of the toilet system 50. The secondary deflector ramp 42 is provided in a rear part of the toilet bowl 52 where the overflow opening is arranged in the toilet bowl 52. The spray ring 48 runs above the secondary deflector ramp 42. However, as an option, the spray ring 48 may be provided with a portion not having any or at least less or different openings in this part above the second splash protecting ramp 42. It is noted that the shroud is not shown in Fig. 8.

Fig. 9 shows detail of the splash deflector 10 of Fig. 8. Again, it is noted that the shroud is not shown in Fig. 9.

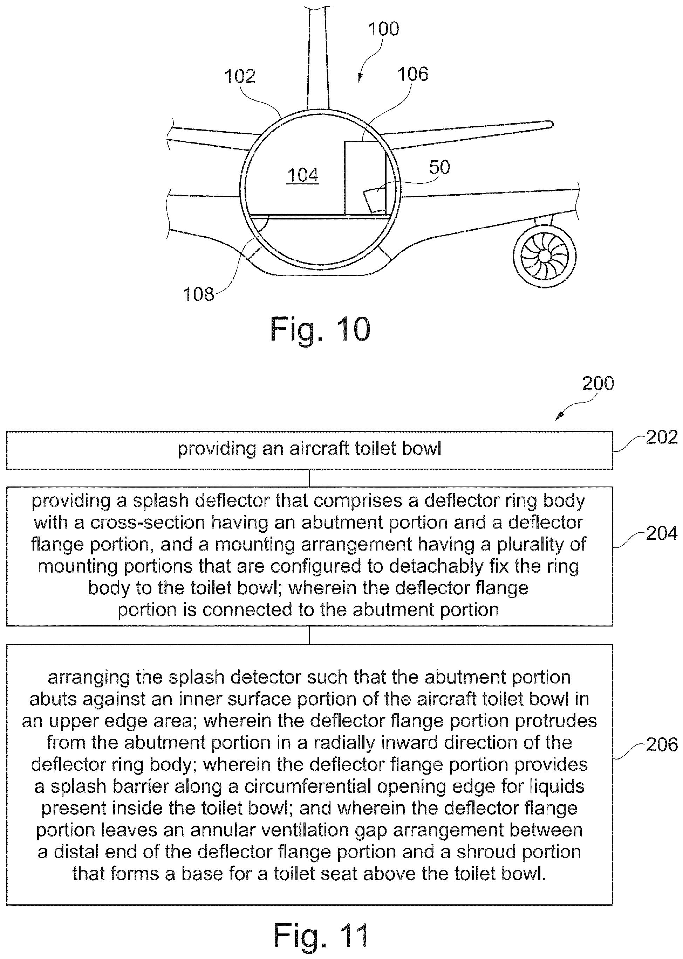

Fig. 10 shows an example of an aircraft 100 in a cross-sectional view. The aircraft 100 comprises a fuselage structure 102 enclosing a cabin area 104. At least one lavatory 106 is provided within the cabin area104. In a first option, the at least one lavatory 106 comprises a toilet with an example of the splash deflector 10 according to one of examples above. In a second option, the at least one lavatory 106 comprises a toilet with an example of the toilet system 50 according to one of the examples above.

In Fig. 10, a cabin floor 108 is indicated on which the lavatory 106 is arranged.

Fig. 11 shows an example of a method 200 for splash protection in an aircraft toilet bowl. The method 200 comprises the following steps:
- In a first step 202, an aircraft toilet bowl is provided.
- In a second step 204, a splash deflector is provided that comprises a deflector ring body with a cross-section having an abutment portion and a deflector flange portion, and a mounting arrangement having a plurality of mounting portions that are configured to detachably fix the ring body to the toilet bowl. The deflector flange portion is connected to the abutment portion.
- In a third step 206, the splash deflector is arranged such that the abutment portion abuts against an inner surface portion of the aircraft toilet bowl in an upper edge area; the deflector flange portion protrudes from the abutment portion in a radially inward direction of the deflector ring body. The deflector flange portion provides a splash barrier along a circumferential opening edge for liquids present inside the toilet bowl; and the deflector flange portion leaves an annular ventilation gap arrangement between a distal end of the deflector flange portion and a shroud portion that forms a base for a toilet seat above the toilet bowl.

It has to be noted that embodiments of the invention are described with reference to different subject matters. In particular, some embodiments are described with reference to method type claims whereas other embodiments are described with reference to the device type claims. However, a person skilled in the art will gather from the description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A splash deflector (10) for an aircraft toilet bowl, the splash deflector comprising:
- a deflector ring body (14) having a cross-section with:
an abutment portion (16) and
a deflector flange portion (18); and
- a mounting arrangement (20) with:
a plurality of mounting portions (22; 22'; 22") that are configured to detachably fix the ring body to the toilet bowl;
wherein the abutment portion is configured to abut against an inner surface portion of the aircraft toilet bowl in an upper edge area;
wherein the deflector flange portion is configured to provide a splash barrier along a circumferential opening edge for liquids present inside the toilet bowl;
wherein the deflector flange portion is connected to the abutment portion, and, in a mounted state, protrudes from the abutment portion in a radially inward direction of the deflector ring body; and
wherein the deflector flange portion is configured to leave an annular ventilation gap arrangement (VG) between a distal end (24) of the deflector flange portion and an inner part (26) of a shroud portion (28) of a shroud (30), which shroud portion forms a base for a toilet seat above the toilet bowl.

2. Splash deflector according to claim 1, wherein the deflector flange portion provides a primary deflector ramp (40) along a majority of the circumferential direction and a secondary deflector ramp (42) along a minor part of the circumferential direction;
wherein, in the mounted state, the secondary deflector ramp is arranged on an lower level than the primary deflector ramp; and
wherein the secondary deflector ramp is configured to provide a staggered splash barrier for an auxiliary opening area (44) provided in an upper edge region of the toilet bowl.

3. Splash deflector according to claim 2, wherein the auxiliary opening area comprises at least one longitudinal overflow opening in the toilet bowl, the opening being arranged below an upper edge of the toilet bowl.

4. Splash deflector according to claim 2 or 3, wherein the secondary deflector ramp is:
i) integrally formed with the deflector flange portion;
ii) removably fixed to the deflector flange portion; or
iii) removably hold by a spray ring arranged along an upper region of the toilet bowl.

5. Splash deflector according to one of the preceding claims, wherein the mounting portions are radially extending mounting plates;
wherein the mounting plates are configured to rest on an upper edge of the toilet bowl; and
wherein the mounting plates comprise through-holes for releasably attaching the splash deflector with screws or other mounting elements to the upper edge of the toilet bowl.

6. Splash deflector according to one of the preceding claims, wherein a holding arrangement (36) for a spray ring is provided that comprises a plurality of spray ring mounts (38).

7. Splash deflector according to one of the preceding claims, wherein the deflector flange portion forms a rigid deflector blade.

8. Splash deflector according to one of the preceding claims, wherein the deflector ring body is made from a water-repellent plastic material.

9. A toilet system (50) for an aircraft, the system comprising:
- an aircraft toilet bowl (52); and
- a splash deflector (10) according to one of the proceeding claims;
wherein the splash deflector is removably mounted to the toilet bowl.

10. Toilet system according to claim 9, wherein a shroud is provided that:
- at least partly encloses an outer side of the toilet bowl;
- extends over the upper edge of the toilet bowl; and
- has an edge flange portion protruding downwards into the toilet bowl; and
wherein the permanent ventilation gap is provided between an inner edge of deflector flange portion and the edge flange portion of the shroud.

11. Toilet system according to claim 9 or 10, wherein the splash deflector is removably mounted to the toilet bowl.

12. Toilet system according to claim 9, 10 or 11, wherein an inner free edge (24) of the deflector flange portion is pointing downwards.

13. Toilet system according to one of claims 9 to 12, wherein a spray ring (48) is arranged below the deflector flange portion;
wherein the spray ring is configured to spray rinsing and/or cleaning fluid into the toilet bowl; and
wherein in a mounted state, the spray ring is arranged below an upper edge of the toilet bowl.

14. An aircraft (100) comprising a fuselage structure (102) enclosing a cabin area (104);
wherein at least one lavatory (106) is provided within the cabin area; and
wherein the at least one lavatory comprises a toilet with
i) a splash deflector (10) according to one of claims 1 to 8, or
ii) a toilet system (50) according to one of claims 9 to 13.

15. A method (200) for splash protection in an aircraft toilet bowl, comprising the following steps:
- providing (202) an aircraft toilet bowl;
- providing (204) a splash deflector that comprises a deflector ring body with a cross-section having an abutment portion and a deflector flange portion, and a mounting arrangement having a plurality of mounting portions that are configured to detachably fix the ring body to the toilet bowl; wherein the deflector flange portion is connected to the abutment portion; and
- arranging (206) the splash deflector such that the abutment portion abuts against an inner surface portion of the aircraft toilet bowl in an upper edge area; wherein the deflector flange portion protrudes from the abutment portion in a radially inward direction of the deflector ring body; wherein the deflector flange portion provides a splash barrier along a circumferential opening edge for liquids present inside the toilet bowl; and wherein the deflector flange portion leaves an annular ventilation gap arrangement between a distal end of the deflector flange portion and a shroud portion that forms a base for a toilet seat above the toilet bowl.
